(19) **Europäisches Patentamt / European Patent Office / Office européen des brevets**

(11) **EP 4 134 232 A1**

(12) **EUROPEAN PATENT APPLICATION**
published in accordance with Art. 153(4) EPC

(43) Date of publication:
**15.02.2023 Bulletin 2023/07**

(21) Application number: **21785170.8**

(22) Date of filing: **18.03.2021**

(51) International Patent Classification (IPC):
**B32B 27/00** (1968.09)     **B32B 27/16** (1968.09)
**B32B 27/18** (1968.09)     **E04F 15/02** (1968.09)
**E04F 13/07** (2006.01)

(52) Cooperative Patent Classification (CPC):
**B32B 27/00; B32B 27/16; B32B 27/18;
E04F 13/07; E04F 15/02**

(86) International application number:
**PCT/JP2021/011213**

(87) International publication number:
**WO 2021/205842 (14.10.2021 Gazette 2021/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.04.2020 JP 2020070305**

(71) Applicant: **Dai Nippon Printing Co., Ltd.
Tokyo 162-8001 (JP)**

(72) Inventors:
• **NETSU, Yoshiaki
  Tokyo 162-8001 (JP)**
• **NAKAJIMA, Tomomi
  Tokyo 162-8001 (JP)**
• **SUMIDA, Yosuke
  Tokyo 162-8001 (JP)**
• **WADA, Masataka
  Tokyo 162-8001 (JP)**
• **YOSHINAMI, Risa
  Tokyo 162-8001 (JP)**

(74) Representative: **Müller-Boré & Partner
Patentanwälte PartG mbB
Friedenheimer Brücke 21
80639 München (DE)**

(54) **TRANSPARENT RESIN FILM, PRODUCTION METHOD FOR TRANSPARENT RESIN FILM, DECORATIVE PANEL, AND PRODUCTION METHOD FOR DECORATIVE PANEL**

(57) The present invention can provide a transparent resin film that has a pattern of protrusions and depressions to have excellent design properties, and can suppress yellowing even when irradiated with electron beams in its production to prevent impairment of design properties, while imparting weather resistance. The present invention relates to a transparent resin film for use in protection of a picture layer laminated on one side of a substrate, the transparent resin film including at least: a transparent resin film; and a transparent surface protective layer, laminated in the stated order, the transparent resin film having a pattern of protrusions and depressions on a side opposite to a side where the picture layer is to be laminated, the transparent surface protective layer containing an ionizing radiation curable resin, at least one of the transparent resin layer or the transparent surface protective layer containing a triazine UV absorber.

EP 4 134 232 A1

**Description**

TECHNICAL FIELD

The present invention relates to transparent resin films, methods for producing transparent resin films, decorative panels, and methods for producing decorative panels.

BACKGROUND ART

Decorative panels are commonly used for decorating components used in building materials, furniture, home electrical appliances, or the like.

In a common decorative panel, a transparent resin film is laminated for protection purpose on a picture layer provided on a substrate. The transparent resin film provides surface properties.

Weathering agents are sometimes added to a layer constituting a transparent resin film to improve weather resistance.

Patent Literature 1 discloses a film for overlaying which includes a laminate including a transparent polypropylene resin film having a thickness of 40 to 100 um and containing a triazine UV absorber and a hindered amine light stabilizer, a protective layer on one side of the resin film, and an adhesion layer on the other side of the resin film. Patent Literature 1 also discloses the use of an ionizing radiation curable resin as the protective layer.

In recent years, embossing is sometimes performed on transparent resin films to form a pattern of protrusions and depressions for the purpose of imparting a visual and tactile design.

Patent Literature 1 only discloses protecting a printed surface from light for preventing discoloration and does not consider formation of a pattern of protrusions and depressions on the surface of the film for overlaying, failing to provide a film having design properties required in recent years.

In formation of a protective layer using an ionizing radiation curable resin, a production method in which the layer is cured by irradiation with an electron beam of a high energy level is recently used for higher productivity.

In the case of a transparent resin film including a layer containing a weathering agent, curing the ionizing radiation curable resin by electron beam irradiation disadvantageously causes yellowing of the layer containing a weathering agent depending on the type of the weathering agent, resulting in impairment of design properties.

CITATION LIST

- Patent Literature

Patent Literature 1: JP 2005-120255 A

SUMMARY OF INVENTION

- Technical Problem

The present invention aims to solve the aforementioned problem and to provide a transparent resin film that has a pattern of protrusions and depressions to have excellent design properties, and can suppress yellowing even when irradiated with electron beams in its production to prevent impairment of design properties, while imparting weather resistance.

- Solution to Problem

The present inventors made intensive studies to solve the above problem and developed a transparent resin film for use in protection of a picture layer laminated on one side of a substrate, the transparent resin film including at least: a transparent resin layer; and a transparent surface protective layer containing an ionizing radiation curable resin, in the stated order, the transparent resin film having a pattern of protrusions and depressions on an opposite side to a side where the picture layer is to be laminated, at least one of the transparent resin layer or the transparent surface protective layer containing a triazine UV absorber. The transparent resin film has excellent design properties, and can suppress yellowing caused by electron beams used for curing the ionizing radiation curable resin to prevent impairment of design properties, while imparting weather resistance. Thus, the present invention was completed.

Specifically, the transparent resin film of the present invention is a transparent resin film for use in protection of a picture layer laminated on one side of a substrate, the transparent resin film including at least: a transparent resin layer; and a transparent surface protective layer, laminated in the stated order, the transparent resin film having a pattern of protrusions and depressions on an opposite side to a side where the picture layer is to be laminated, the transparent surface protective layer containing an ionizing radiation curable resin, at least one of the transparent resin layer or the transparent surface protective layer containing a triazine UV absorber.

The transparent resin film of the present invention preferably has a thickness at a depression of the pattern of protrusions and depressions of 80 um or more.

Preferably, the transparent resin film of the present invention has a pattern of protrusions and depressions on the side where the picture layer is to be laminated, and the pattern of protrusions and depressions on the side where the picture layer is to be laminated has a Rzmax as defined in JIS B 0601 (2001) of 80 um or less.

The transparent resin film of the present invention preferably includes an adhesion primer layer on an opposite side to a side facing the transparent surface protective layer of the transparent resin layer.

The transparent resin layer preferably contains a thermoplastic resin.

The transparent resin layer preferably includes at least two layers.

The transparent resin layer preferably contains a flame retardant.

The transparent surface protective layer preferably contains a flame retardant.

The transparent resin layer containing the flame retardant preferably further contains a filler.

The flame retardant is preferably at least one selected from the group consisting of phosphinic acid metal salt flame retardants, phosphazene flame retardants, and NOR hindered amine flame retardants.

The transparent surface protective layer preferably contains at least one of an antibacterial agent, an antiviral agent, or an anti-allergenic agent.

The decorative panel of the present invention preferably includes the transparent resin film and a substrate including a picture layer.

The method for producing a transparent resin film of the present invention includes: preparing a transparent resin layer containing a triazine UV absorber; applying an ionizing radiation curable resin to one side of the transparent resin layer; and irradiating the ionizing radiation curable resin with an electron beam.

The preparing preferably includes preparing a thermoplastic resin and laminating, on one side of the thermoplastic resin, a thermoplastic resin containing a triazine UV absorber to obtain a transparent resin layer.

The ionizing radiation curable resin preferably contains a triazine UV absorber.

The method for producing a decorative panel of the present invention is a method for producing a decorative panel including a substrate including a picture layer and the transparent resin film of the present invention in the stated order, the method including: forming an adhesive layer on a side where the picture layer is to be laminated of the transparent resin film; and bonding the transparent resin film and the picture layer via the adhesive layer.

- Advantageous Effects of Invention

The present invention can provide a transparent resin film that has a pattern of protrusions and depressions to have excellent design properties, and can suppress yellowing even when irradiated with electron beams in its production to prevent impairment of design properties, while imparting weather resistance.

BRIEF DESCRIPTION OF DRAWINGS

Fig. 1 is a schematic cross-sectional view of an example of the transparent resin film of the present invention.

Fig. 2 is a schematic cross-sectional view of a preferred example of the transparent resin film of the present invention.

Fig. 3 is a schematic view for illustrating the thickness at a depression of the pattern of protrusions and depressions of the transparent resin film of the present invention.

Fig. 4 is a schematic view for illustrating the thickness at a depression of the pattern of protrusions and depressions of the transparent resin film of the present invention.

Fig. 5 is a schematic cross-sectional view of an example of a decorative panel.

Fig. 6(a) and Fig. 6(b) are schematic views for illustrating a method for evaluating flame retardancy.

DESCRIPTION OF EMBODIMENTS

transparent resin film>

A description is given below on the transparent resin film of the present invention.

The numerical range indicated by "-" herein means "the lower limit or larger and the upper limit or smaller" (e.g., the range "α-β" refers to the range "α or larger and β or smaller").

The transparent resin film of the present invention is a transparent resin film for use in protection of a picture layer laminated on one side of a substrate. The transparent resin film includes at least: a transparent resin layer; and a transparent surface protective layer, laminated in the stated order. The transparent resin film has a pattern of protrusions and depressions on an opposite side to a side where the picture layer is to be laminated. The transparent surface protective layer contains an ionizing radiation curable resin. The transparent resin layer and/or the transparent surface protective layer contains a triazine UV absorber.

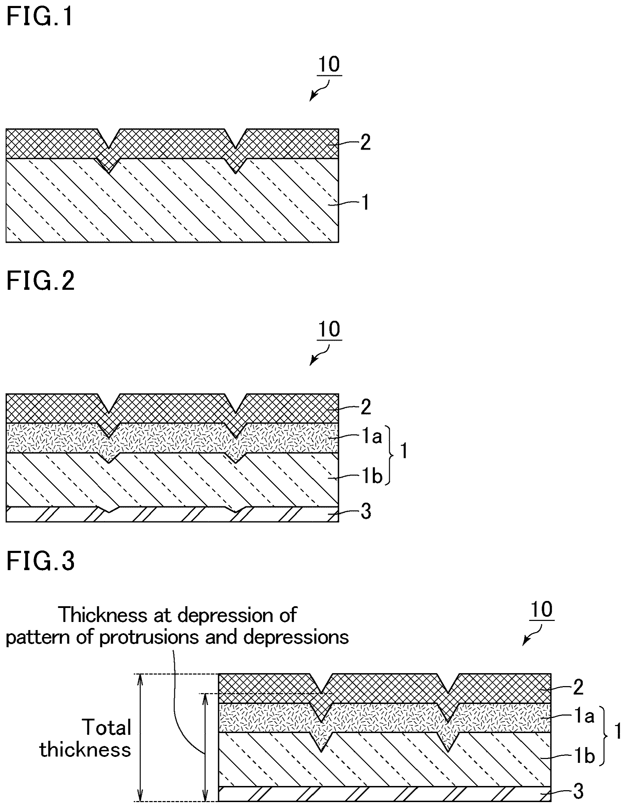

Fig. 1 is a schematic cross-sectional view of an example of the transparent resin film of the present invention.

A transparent resin film 10 of the present invention includes at least: a transparent resin layer 1; and a transparent surface protective layer 2, laminated in the stated order. The transparent surface protective layer 2 contains an ionizing radiation curable resin. The transparent resin layer 1 and/or the transparent surface protective layer 2 contains a triazine UV absorber.

Fig. 2 is a schematic cross-sectional view of a preferred example of the transparent resin film of the present invention.

In the transparent resin film 10 of the present invention, the transparent resin layer 1 preferably has a two-layer structure including a transparent resin layer 1a and a transparent resin layer 1b.

The transparent resin film 10 preferably includes an adhesion primer layer 3 on an opposite side to a side facing the transparent surface protective layer 2 of the transparent resin layer 1.

Each component is described below.

(Transparent resin layer)

The transparent resin film 10 of the present invention includes the transparent resin layer 1.

The transparent resin layer 1 may be any layer through which a picture layer on a substrate is visible, and may be colorless transparent, colored transparent, or semitransparent. The transparent resin layer 1 may be formed of any materials, and preferably contains a thermoplastic resin.

Examples of the thermoplastic resin include: olefin-based thermoplastic resins such as low-density polyethylene (including linear low-density polyethylene), medium-density polyethylene, high-density polyethylene, an ethylene-a olefin copolymer, homopolypropylene, polymethyl pentene, polybutene, an ethylene-propylene copolymer, a propylene-butene copolymer, an ethylene-vinyl acetate copolymer, a saponified ethylene-vinyl acetate copolymer, and a mixture of these; thermoplastic ester-based resins such as polyethylene terephthalate, polybutylene terephthalate, polyethylene naphthalate, a polyethylene naphthalate-isophthalate copolymer, polycarbonate, and polyarylate; acrylic thermoplastic resins such as polymethyl methacrylate, polyethyl methacrylate, polyethyl acrylate, and polybutyl acrylate; polyamide-based thermoplastic resins such as Nylon 6 and Nylon 66; polyimides; polyurethanes; polystyrene; acrylonitrile-butadiene-styrene resins; ionomers; and polyvinyl chloride.

Each of these thermoplastic resins may be used alone, or two or more thereof may be used in admixture.

Among these, preferred are olefin-based thermoplastic resins because they are excellent in printability of a picture layer and embossability and are inexpensive.

The transparent resin layer 1 may have a two-layer structure (including the transparent resin layer 1a and the transparent resin layer 1b).

When the transparent resin layer 1 has a structure including at least two layers, the layers of the transparent resin layer 1 may be laminated via a transparent adhesive layer described below.

Adjacent layers of the transparent resin layer 1 may be continuously laminated to each other by thermal lamination.

The thermal lamination may be carried out by a known method such as melt co-extrusion using a T-die.

The thickness of the transparent resin layer 1 is preferably 20 um or more and 300 um or less, more preferably 40 um or more and 200 um or less, still more preferably 50 um or more and 150 um or less.

When the lower limit of the thickness of the transparent resin layer is within the above range, a decorative panel including the transparent resin film 10 has higher scratch resistance and higher abrasion resistance. When the upper limit of the thickness of the transparent resin layer exceeds the above range, the sharpness (meaning the visibility of a picture layer described later) of a decorative panel including the transparent resin film 10 may decrease.

The transparent resin layer 1 may be colored. In this case, a colorant may be added to the thermoplastic resin. Examples of usable colorants include pigments or dyes used in the picture layer described later.

In the transparent resin film 10 of the present invention, the transparent resin layer 1 and/or the transparent surface protective layer 2 contains a triazine UV absorber.

The following describes a case where the transparent resin layer 1 contains a triazine UV absorber.

Examples of the triazine UV absorber include 2,4-bis(2,4-dimethylphenyl)-6-(2-hydroxy-4-n-octyloxyphenyl)-1,3,5-triazine, 2-(2,4-dihydroxyphenyl)-4,6-bis(2,4-dimethylphenyl)-1,3,5-triazine, 2-(2,4-dihydroxyphenyl)-4,6-diphenyl-1,3,5-triazine, tris(2-ethylhexyl) 4,4',4"-(1,3,5-triazine-2,4,6-triyltriimino)trisbenzoate, 2-(2-hydroxy-4-methoxyphenyl-4,6-diphenyl-1,3,5-triazine, N,N',N''-tri(m-tolyl)-1,3,5-triazine-2,4,6-triamine, 2,4,6-tris(4-butoxy-2-hydroxyphenyl)-1,3,5-triazine, and 2-(4,6-diphenyl-1,3,5-triazin-2-yl)-5-[2-(2-ethylhexanoyloxy)ethoxy] phenol.

One UV absorber may be used alone, or two or more thereof may be used in admixture.

When the transparent resin layer 1 has a structure including at least two layers, a layer on the side facing the transparent surface protective layer 2 of the transparent resin layer 1 (e.g., the transparent resin layer 1a in the case of two-layer structure) preferably contains the triazine UV absorber from the following standpoints: preventing yellowing caused by electron beam irradiation in the production of the transparent surface protective layer 2 described later, while imparting weather resistance; and adhesion to the picture layer described later.

The amount of the triazine UV absorber is preferably 0.1% by mass or more and 3% by mass or less, more preferably 0.2% by mass or more and 1% by mass or less, still more preferably 0.5% by mass or less, based on the mass of the transparent resin layer 1.

When the amount of the triazine UV absorber in the transparent resin layer 1 is less than 0.1% by mass, weather resistance may not be imparted. When the amount of the triazine UV absorber in the transparent resin layer 1 is more than 3% by mass, the transparency of the film may be reduced to impair the design properties of the decorative panel or the film may have insufficient adhesion to the picture layer described later to have lower processability.

When the transparent resin layer 1 includes two or more layers, the amount is preferably 0.1% by mass or more and 3% by mass or less based on the mass of the layer containing the triazine UV absorber. When the transparent resin layer 1 includes two or more layers, the two or more layers each preferably contain the triazine UV absorber from the standpoint of suitably suppressing yellowing in the production. The amount in each layer is more preferably 1% by mass or less, still more preferably 0.5% by mass or less.

When the transparent resin layer 1 includes two or more layers, the layer positioned closer to the transparent surface protective layer 2 preferably contains a larger amount of the triazine UV absorber than the layer positioned farther from the transparent surface protective layer 2, from the standpoint of favorably imparting weather resistance.

The transparent resin layer 1 and/or the transparent surface protective layer 2 preferably contains a flame retardant.

Flame retardants reduce flammability by forming char during combustion or trapping radicals in combustion gases.

The following describes a case where the transparent resin layer 1 contains a flame retardant.

Examples of the flame retardant include phosphinic acid metal salt flame retardants, phosphazene flame retardants, NOR hindered amine flame retardants, halogen flame retardants, antimony flame retardants, metal hydroxide flame retardants, and phosphate ester flame retardants.

From the environmental standpoint or the standpoint of reducing the addition amount to maintain the transparency of the layer containing the flame retardant, preferred is at least one selected from the group consisting of phosphinic acid metal salt flame retardants, phosphazene flame retardants, and NOR hindered amine flame retardants. In terms of the property of trapping radicals generated from organic substances during combustion to make combustion difficult to continue and the effect of inhibiting spread of flame in a horizontal flammability test, preferred is at least one selected from the group consisting of phosphinic acid metal salt flame retardants and phosphazene flame retardants. In terms of the effect of reducing the amount of heat generated in the heat generation test according to ISO 5660-1 and the property of imparting weather resistance, preferred is a NOR hindered amine flame retardant.

Examples of the phosphinic acid metal salt flame retardants include aluminum tris(diethylphosphinate), aluminum tris(methylethylphosphinate), aluminum tris(diphenylphosphinate), zinc bis(diethylphosphinate), zinc bis(methylethylphosphinate), zinc bis(diphenylphosphinate), titanyl bis(diethylphosphinate), titanium tetrakis(diethylphosphinate), titanyl bis(methylethylphosphinate), titanium tetrakis(methylethylphosphinate), titanyl bis(diphenylphosphinate), and titanium tetrakis(diphenylphosphinate).

Commercially available phosphinic acid metal salt flame retardants include "EXOLITE OP-930", "EXOLITE OP-935", "EXOLITE OP-1230", "EXOLITE OP-1240", and "EXOLITE OP-1312" all available from Clariant Japan K.K.

Examples of the phosphazene flame retardants include: cyclic and/or linear $C_{1-6}$ alkyl $C_{6-20}$ aryloxyphosphazenes such as phenoxyphosphazene, (poly)tolyloxyphosphazenes (e.g., o-tolyloxyphosphazene, m-tolyloxyphosphazene, p-tolyloxyphosphazene, o,m-tolyloxyphosphazene, o,p-tolyloxyphosphazene, m,p-tolyloxyphoaphazene, o,m,p-tolyloxyphosphazene), and (poly)xylyloxyphosphazene; cyclic and/or linear $C_{6-20}$ aryl $C_{1-10}$ alkyl $C_{6-20}$ aryloxyphosphazenes such as (poly)phenoxytolyloxyphosphazenes (e.g., phenoxy-o-tolyloxyphosphazene, phenoxy-m-tolyloxyphosphazene, phenoxy-p-tolyloxyphosphazene, phenoxy-m-tolyloxyphosphazene, phenoxy-p-tolyloxyphosphazene, phenoxy-o,m-tolyloxyphosphazene, phenoxy-o,p-tolyloxyphosphazene, phenoxy-m,p-tolyloxyphosphazene, phenoxy-o,m,p-tolyloxyphosphazene), (poly)phenoxyxylyloxyphosphazene, and (poly)phenoxytolyloxyxylyloxyphosphazene. Preferred are cyclic and/or linear phenoxyphosphazenes, cyclic and/or linear $C_{1-3}$ alkyl $C_{6-20}$ aryloxyphosphazenes, and $C_{6-20}$ aryloxy $C_{1-3}$ alkyl $C_{6-20}$ aryloxyphosphazenes (e.g., cyclic and/or linear tolyloxyphosphazenes, cyclic and/or linear phenoxytolylphenoxyphosphazenes).

The examples also include compounds with a crosslinked structure of a 4,4'-diphenylene group such as compounds with a cross-linked structure of 4,4'-sulfonyldiphenylene (bisphenol S residue), compounds with a crosslinked structure of a 2,2-(4,4'-diphenylene)isopropylidene group, compounds with a cross-linked structure of a 4,4'-oxydiphenylene group, and compounds with a crosslinked structure of a 4,4'-thiodiphenylene group.

Examples of the NOR hindered amine flame retardants include: 1-cyclohexyloxy-2,2,6,6-tetramethyl-4-octadecylaminopiperidine; bis(1-octyloxy-2,2,6,6-tetramethylpiperidin-4-yl) sebacate; 2,4-bis[(1-cyclohexyloxy-2,2,6,6-tetramethylpiperidin-4-yl)butylamino]-6-(2-hydroxyethylamino)-s-triazine; bis(1-cyclohexyloxy-2,2,6,6-tetramethylpiperidin-4-yl) adipate; an oligomeric compound that is a condensation product of 4,4'-hexamethylenebis(amino-2,2,6,6-tetramethylpiperidine) and 2,4-dichloro-6-[(1-octyloxy-2 2,6,6-tetramethylpiperidin-4-yl)butylamino]-s-triazine end-capped with 2-chloro-4,6-bis(dibutylamino)-s-triazine; an oligomeric compound that is a condensation product of 4,4'-hexamethylenebis(amino-2,2,6,6-tetramethylpiperidine) and 2,4-dichloro-6-[(1-cyclohexyloxy-2,2,6,6-tetramethylpiperidin-4-yl)butylamino]-s-triazine end-capped with 2-chloro-4,6-bis(dibutylamino)-s-triazine; 2,4-bis[(1-cyclohexyloxy-2,2,6,6-piperidin-4-yl)-6-chloro]-s-triazine; a reaction product of peroxidized 4-butylamino-2,2,6,6-tetramethylpiperidine, 2,4,6-trichloro-s-triazine, cyclohexane, and N,N'-ethane-1,2-diylbis(1,3-propanediamine) (N,N',N'''-tris{2,4-bis[(1-cyclohexyloxy-2,2,6,6-tetramethylpiperidin-4-yl)n-butylamino]-s-triazin-6-yl}-3,3'-ethylenediiminopropylamine); bis(1-undecanoxy-2,2,6,6-tetramethylpiperidin-4-yl)carbonate; 1-undecyloxy-2,2,6,6-tetramethylpiperidin-4-one; and bis(1-stearyloxy-2,2,6,6-tetramethylpiperidin-4-yl)carbonate. Examples of commercially available NOR hindered amine flame retardants include Flamestab NOR 116FF, TINUVIN NOR371, TINUVIN XT850FF, TINUVIN XT855FF, and TINUVIN PA123 all available from BASF SE, and LA-81 available from Adeka Corporation.

One of the flame retardants may be used alone, or two or more thereof may be used in admixture.

When the transparent resin layer 1 has a structure including at least two layers, the layer positioned closer to the transparent surface protective layer 2 (e.g., the transparent resin layer 1a in the case of two-layer structure) preferably contains the flame retardant for higher flame retardancy.

The amount of the flame retardant is preferably 3% by mass or more, more preferably 4.4% by mass or more, based on the mass of the transparent resin layer 1.

The amount of the flame retardant is preferably 20% by mass or less, more preferably 15% by mass or less, based on the mass of the transparent resin layer 1.

When the lower limit of the amount of the flame retardant is within the above range, the transparent resin film 10 has still higher flame retardancy. When the upper limit of the amount of the flame retardant is within the above range, the transparency of the transparent resin film 10 is further maintained.

When the transparent resin layer 1 includes two or more layers, the amount of the flame retardant is preferably 3% by mass or more, more preferably 4.4% by mass or more and preferably 20% by mass or less, more preferably 15% by mass or less, based on the mass of the layer containing the flame retardant.

The transparent resin layer 1 preferably contains a filler.

The filler may be any filler that does not impair the transparency of the transparent resin layer 1. To further improve the sharpness of the decorative panel including the transparent resin film 10, preferred is a filler that shows an average particle size equal to or smaller than the wavelength of visible light.

Examples of the filler include inorganic fillers such as silica, calcium carbonate, talc, and clay.

The filler is preferably contained in the layer containing the flame retardant.

When the transparent resin layer 1 has a one-layer structure and contains the flame retardant, the transparent resin layer 1 preferably contains the filler. When the transparent resin layer has a structure including at least two layers and one of the at least two layers contains the flame retardant, the layer containing the flame retardant preferably contains the filler.

The filler more preferably contains an inorganic filler with a polar group on its surface.

When the layer containing the flame retardant contains an inorganic filler with a polar group on its surface, the flame retardancy of the transparent resin film 10 is further improved and the sharpness of the decorative panel including the transparent resin film 10 is further enhanced. The mechanism of this is presumably as follows. The polar part of the flame retardant is attracted to the polar group on the surface of the inorganic filler, and the flame retardant on the surface of the inorganic filler enhances the dispersibility.

The inorganic filler with a polar group on its surface used may be a hydrophilic inorganic filler. Examples thereof include an inorganic filler with a hydroxy group such as a silanol group on its surface. More specifically, hydrophilic silica can be used.

The silica used as the filler can be either natural or synthetic, and either crystalline or amorphous. Synthetic amorphous silica may be prepared by either wet or dry methods. Any wet method for preparing synthetic wet silica may be employed, and examples thereof include a precipitation method and a gelling method. Any dry method for preparing synthetic dry silica may be employed, and examples thereof include a combustion method and an arc method.

To further improve the sharpness of the decorative panel including the transparent resin film 10, the silica used as the filler is preferably silica having a small average particle size, more preferably fumed silica obtained by the combustion method, still more preferably hydrophilic fumed silica.

The filler such as the hydrophilic fumed silica preferably has a BET specific surface area of 50 $m^2/g$ or more, more preferably 130 $m^2/g$ or more, still more preferably 200 $m^2/g$ or more.

When the lower limit of the BET specific surface area of the filler is within the above range, the average particle size is small, and the amount of silanol increases in the case of hydrophilic fumed silica. Addition of such a filler further suppresses impairment of the transparency of the transparent resin layer 1 and further improves the dispersibility of the flame retardant. As a result, the flame retardancy of the transparent resin film 10 and the sharpness of the decorative panel including the transparent resin film 10 are further improved. When the lower limit of the BET specific surface area of the filler is within the above range, the flame retardancy of the transparent resin film 10 is improved, which enables reduction of the amount of the flame retardant.

The BET specific surface area herein is the BET specific surface area measured by the nitrogen adsorption method in accordance with DIN 66131.

Hydrophilic fumed silica used as the filler may be a commercial product. Examples of such commercial products include AEROSIL 50, AEROSIL 130, AEROSIL 200, AEROSIL 300, and AEROSIL 380 all available from Nippon Aerosil Co., Ltd.

When the layer containing the flame retardant contains a filler, the amount of the filler in the layer containing the flame retardant is preferably 50 parts by mass or more, more preferably 100 parts by mass or more, still more preferably 200 parts by mass or more, per 100 parts by mass of the flame retardant in the layer containing the flame retardant of the transparent resin layer 1.

The lower limit of the amount of the filler in the layer containing the flame retardant is within the above range, which further improves the sharpness of the decorative panel including the transparent resin film 10. The amount of the filler in the layer containing the flame retardant is preferably 25 parts by mass or less, more preferably 20 parts by mass or less, still more preferably 10 parts by mass or less.

The transparent resin layer 1 may contain various additives such as matting agents, blowing agents, lubricants, antistatic agents, antioxidants, light stabilizers, radical scavengers, and soft components (e.g., rubber).

The transparent resin layer 1 may be subjected to surface treatment such as saponification treatment, glow discharge treatment, corona discharge treatment, plasma treatment, ultraviolet (UV) treatment, or flame treatment, within a range of the gist of the present invention.

(Transparent surface protective layer)

The transparent resin film 10 of the present invention includes the transparent surface protective layer 2.

The transparent surface protective layer 2 imparts surface properties such as scratch resistance, abrasion resistance, water resistance, and contamination resistance.

The transparent surface protective layer 2 contains an ionizing radiation curable resin.

The transparent surface protective layer 2 containing an ionizing radiation curable resin can impart high surface hardness.

The ionizing radiation-curable resin is preferably, for example, an oligomer (including what we call a prepolymer and a macromonomer) having a radical polymerizable unsaturated bond or a cationic polymerizable functional group in the molecule and/or a monomer having a radical polymerizable unsaturated bond or a cationic polymerizable functional group in the molecule.

The term "ionizing radiation" herein refers to an electromagnetic wave or charged particle having energy capable of polymerizing or crosslinking molecules. The ionizing radiation is typically an electron beam (EB) or ultraviolet light (UV).

Examples of the oligomer or monomer include compounds having a radical polymerizable unsaturated group (e.g., a (meth)acryloyl group, a (meth)acryloyloxy group) or a cationic polymerizable functional group (e.g., an epoxy group) in the molecule. Each of these oligomers or monomers may be used alone, or two or more thereof may be used in admixture. The term "(meth)acryloyl group" as used herein refers to an acryloyl group or a methacryloyl group.

The oligomer having a radical polymerizable unsaturated group in the molecule is preferably, for example, an oligomer of urethane (meth)acrylate, polyester (meth)acrylate, epoxy (meth)acrylate, melamine (meth)acrylate, or triazine (meth)acrylate, more preferably a urethane (meth)acrylate oligomer. An oligomer having a molecular weight of about 250 to 100000 is typically used.

The monomer having a radical polymerizable unsaturated group in the molecule is preferably, for example, a polyfunctional monomer, more preferably a polyfunctional (meth)acrylate.

Examples of the polyfunctional (meth)acrylate include diethylene glycol di(meth)acrylate, propylene glycol di(meth)acrylate, bisphenol A ethylene oxide-modified di(meth)acrylate, trimethyrolpropane tri(meth)acrylate, trimethylolpropane ethylene oxide tri(meth)acrylate, dipentaerythritol tetra(meth)acrylate, dipentaerythritol penta(meth)acrylate (pentafunctional (meth)acrylate), and dipentaerythritol hexa(meth)acrylate (hexafunctional (meth)acrylate). The term "polyfunctional monomer" herein refers to a monomer having multiple radical polymerizable unsaturated groups.

The ionizing radiation-curable resin preferably further contains an ionizing radiation-curable resin containing a urethane acrylate oligomer and a polyfunctional monomer. The ionizing radiation-curable resin particularly preferably contains a urethane acrylate oligomer and a polyfunctional monomer at a mass ratio (urethane acrylate oligomer/polyfunctional monomer) of 6/4-9/1. Within such a mass ratio range, better scratch resistance can be achieved.

If needed, a monofunctional monomer may be appropriately used in addition to the ionizing radiation-curable resin to the extent not inconsistent with the purpose of the present invention.

Examples of the monofunctional monomer include methyl(meth)acrylate, 2-ethylhexyl(meth)acrylate, and phenoxyethyl(meth)acrylate.

The transparent surface protective layer 2 can be obtained by curing an ionizing radiation curable resin composition containing the ionizing radiation curable resin.

The ionizing radiation curable resin composition may contain a photopolymerization initiator.

In the case where the ionizing radiation-curable resin composition is a resin composition containing a radical polymerizable unsaturated group, the photopolymerization initiator used may be an acetophenone, a benzophenone, a thioxanthone, benzoin, a benzoin methyl ether, or a mixture of these.

In the case where the ionizing radiation-curable resin composition is a resin composition containing a cationic polymerizable unsaturated group, the photopolymerization initiator used may be an aromatic diazonium salt, an aromatic sulfonium salt, an aromatic iodonium salt, a metallocene compound, a benzoin sulfonic acid ester, or a mixture of these.

The amount of the photopolymerization initiator is about 0.1-10 parts by mass per 100 parts by mass of the ionizing radiation-curable resin.

In the transparent resin film 10, the transparent resin layer 1 and/or the transparent surface protective layer 2 contains a triazine UV absorber.

From the standpoint of suppressing yellowing described above while imparting weather resistance, a triazine UV absorber is preferably contained in the transparent surface protective layer 2, more preferably in the transparent resin layer 1 and the transparent surface protective layer 2.

The following describes a case where the transparent surface protective layer 2 contains a triazine UV absorber.

The triazine UV absorber used can be appropriately selected from those listed for the transparent resin layer 1.

The amount of the triazine UV absorber is preferably 0.1% by mass or more and 3% by mass or less based on the mass of the transparent surface protective layer 2.

When the amount of the triazine UV absorber in the transparent surface protective layer 2 is less than 0.1% by mass, weather resistance may not be imparted. When the amount of the triazine UV absorber in the transparent surface protective layer 2 is more than 3% by mass, the transparency of the film may be lowered to impair the design properties of the decorative panel or adhesion to the transparent resin layer 1 may be insufficient to lower the processability.

To further improve flame retardancy, the transparent resin layer 1 and the transparent surface protective layer 2 preferably contain a flame retardant.

The flame retardant used can be appropriately selected from those listed for the transparent resin layer 1.

The lower limit of the amount of the flame retardant in the transparent surface protective layer 2 is preferably 3% by mass, more preferably 4.4% by mass and the upper limit thereof is preferably 20% by mass, more preferably 15% by mass, relative to the total mass of the transparent surface protective layer 2 set to 100% by mass.

The transparent surface protective layer 2 may contain the flame retardant mentioned above.

The transparent surface protective layer 2 containing a flame retardant can reduce flammability because the flame retardant exhibits char formation, an ability of scavenging radicals in combustion gases, etc., in response to heat applied from the surface during combustion.

The lower limit of the amount of the flame retardant in the transparent surface protective layer 2 is preferably 3% by mass, more preferably 4.4% by mass and the upper limit thereof is preferably 20% by mass, more preferably 15% by mass, relative to the total mass of the transparent surface protective layer 2 set to 100% by mass.

The transparent surface protective layer 2 preferably contains the flame retardant and a filler from the standpoint of improving flame retardancy while maintaining the sharpness of the decorative panel including the transparent resin film 10.

The filler used can be appropriately selected from those listed for the transparent resin layer 1, and silica is preferred. In consideration of dispersibility of the flame retardant, fumed silica is more preferred, and among the fumed silica, hydrophilic fumed silica is still more preferred.

The amount of the filler added is about 1-80 parts by mass per 100 parts by mass of the ionizing radiation curable resin.

The transparent surface protective layer 2 may contain additives other than the filler. Examples of the additives include antioxidants, lubricants, blowing agents, UV absorbers, light stabilizers, deodorants, antibacterial agents, antiviral agents, anti-allergenic agents, antifungal agents, and anti-allergenic agents.

Among them, the transparent surface protective layer 2 preferably contains at least one of an antibacterial agent, an antiviral agent, or an anti-allergenic agent, if necessary.

The transparent surface protective layer 2 containing an antibacterial agent or an antiviral agent can impart antibacterial or antiviral properties to the transparent resin film 10. In addition, the transparent surface protective layer 2 containing an anti-allergenic agent can impart anti-allergenic properties to the transparent resin film 10.

The antibacterial agents and antiviral agents can be normally roughly classified into the organic type and the inorganic type.

Examples of organic antibacterial agents and organic antiviral agents include quaternary ammonium salt-based agents, quaternary phosphonium salt-based agents, pyridine-based agents, pyrithione-based agents, benzimidazole-based agents, organic iodine-based agents, isothiazoline-based agents, anionic agents, and ether-based agents.

Examples of inorganic antibacterial agents and inorganic antiviral agents include those obtained by supporting a metal ion (e.g., silver, copper, or zinc) on zeolite, apatite, zirconia, glass, molybdenum oxide, or the like.

One of the above antibacterial agents or antiviral agents may be used alone, or two or more thereof may be used in admixture.

Among the organic antibacterial agents and organic antiviral agents, particularly favorably used is an antibacterial agent or antiviral agent based on a benzimidazole or anionic compound which can maintain the particle shape.

The phrase "maintain the particle shape" means that the agent is not dissolved in a composition to form a cured resin of the transparent surface protective layer 2 (curable resin composition before curing) and is present in the state of particles. The benzimidazole compound particles or anionic compound particles are therefore likely to float up to the surface during the process of forming the transparent surface protective layer 2, which allows the benzimidazole compound particles or anionic compound particles to be locally present on the outermost surface side of the transparent surface protective layer 2.

The localized presence of the benzimidazole compound particles or anionic compound particles on the outermost surface side of the transparent surface protective layer 2 can reduce the amount of the antibacterial agent or antiviral agent required to obtain a certain level of antibacterial or antiviral properties, which can reduce or prevent a decrease in the scratch resistance of the transparent surface protective layer 2.

The anionic antibacterial agent or anionic antiviral agent is preferably, for example, one containing a styrene resin, a styrene polymer derivative compound, and an unsaturated carboxylic acid derivative compound.

The styrene polymer derivative compound and the unsaturated carboxylic acid derivative compound preferably contain at least one structure selected from the structures of styrene, sodium sulfonate, acrylic acid, maleic acid, and fumaric acid, more preferably contain all these structures. The reason for this is that viruses are classified into two types, enveloped viruses and non-enveloped viruses, and the structure of the antibacterial agent or antiviral agent capable of effectively inhibit the activity of each type may be different.

Therefore, when the effect is expected only against, for example, influenza viruses which are non-enveloped viruses, the agent only needs to contain a styrene polymer derivative compound alone. In some cases, styrene resin alone may be sufficient to achieve the effect.

Among the inorganic antibacterial agents and inorganic antiviral agents, preferred is a silver-based antibacterial agent or antiviral agent from the standpoint of the excellent safety owing to the absence of biotoxicity. More preferred is a silver-supporting phosphate glass compound, a silver-zeolite compound, or a molybdenum oxide/silver double salt compound because they can exhibit antibacterial and antiviral properties even in a small amount and therefore the amount thereof to be added can be reduced.

The inorganic antibacterial agent or inorganic antiviral agent preferably has an average particle size of, for example, 0.1-10 um.

The antibacterial or antiviral agent having an average particle size within the above range is favorably dispersed to favorably impart antibacterial or antiviral properties uniformly.

When the silver-based antibacterial agent or antiviral agent is added to the transparent surface protective layer 2, the transparent surface protective layer 2 may be discolored (discoloration may occur in the coating solution containing the agent due to heat or light or in the transparent surface protective layer 2 after formation thereof due to heat or light) in some cases. In such cases, an UV inhibitor or a light stabilizer may be appropriately added to solve the issue.

For example, for the molybdenum oxide/silver double salt compound, a benzotriazole compound can be used to suppress discoloration.

The amount of the antibacterial agent or antiviral agent is, for example, about 0.1-10 parts by mass per 100 parts by mass of the ionizing radiation curable resin.

The anti-allergenic agent contains at least one of inorganic and organic compounds. One agent may be used alone, or two or more agents may be used in admixture.

The anti-allergenic agent may also have the antibacterial or antiviral properties.

The inorganic compound is preferably a metal-supported material.

The metal-supported material is preferably, for example, at least one selected from the group consisting of titanium oxide, calcium phosphate, calcium silicate, zirconium phosphate, zeolite, silica alumina, magnesium silicate, and magnesium phosphate. Among these, preferred are titanium oxide, zirconium phosphate, and the like.

The metal supported on the metal-supported material is preferably at least one selected from the group consisting of gold, silver, platinum, zinc, and copper. Among these, preferred are silver, zinc, and the like.

Favorable examples of commercial products include "PARAFINE ANV-100: a silver-supported inorganic compound" available from Ohara Paragium Chemical Co. Ltd. and "ATOMY BALL TZ-R: zinc-supported titanium oxide" available from JGC Catalysts and Chemicals Ltd. These anti-allergenic agents are effective against various allergens such as dust mites and pollen.

The organic compound is preferably a water-insoluble polymer containing a phenolic hydroxy group, a polyphenolic compound-supported inorganic solid acid, or a polymer containing at least one monomer component selected from the group consisting of styrenesulfonic acid and salts thereof.

Exemplary commercial products of the water-insoluble polymer containing a phenolic hydroxy group include "Allerbuster (trade name)" available from Sekisui Chemical Co., Ltd. and "MARKAR LYNCUR M (trade name)" available from Maruzen Petrochemical Co., Ltd.

Examples of the polyphenolic compound-supported inorganic solid acid include a combination of a polyphenolic compound and a zirconium compound. Exemplary commercial products thereof include "AlleRemove (trade name)" available from Toagosei Co., Ltd. These anti-allergenic agents are effective against various allergens such as dust mites and pollen.

Examples of usable styrenesulfonic acid and salts thereof include materials shown in JP 6136433 B. Preferred examples thereof include a styrenesulfonate homopolymer, a styrenesulfonate-styrenesulfonic acid copolymer, a styrenesulfonate-styrene copolymer, a styrenesulfonic acid-styrene copolymer, and a styrenesulfonate-styrenesulfonic acid-styrene ternary copolymer.

The anti-allergenic agent may be a mixture of an organic compound and an inorganic compound, such as a mixture of an anionic phenolic material and a zinc-based material with anti-allergenic properties.

Examples of the anionic phenolic material include tannin, tannic acid/antimony potassium tartrate, a phenolsulfonic acid formaldehyde resin, a sulfonic compound of a Novorak type resin, methanesulfonic acid of a Novorak type resin, methanesulfonic acid of a resol type resin, benzylated phenolsulfonic acid, a thiophenolic compound, a dihydroxy compound, a diphenyl sulfone compound, a ligand compound, and metal chelate compounds thereof.

The zinc-based material is appropriately selected from a water-soluble zinc compound, a water-insoluble zinc compound, a zinc/metal oxide composite material, and the like. Preferred is a material containing a water-insoluble zinc compound and/or water-insoluble zinc/metal oxide composite particles dispersed in water and having an average particle size of 50 um or less, in which the metal oxide contains at least one of titania, silica, or alumina.

The amount of the anti-allergenic agent is, for example, about 0.1-10 parts by mass per 100 parts by mass of the ionizing radiation curable resin.

The transparent surface protective layer 2 may have any thickness. The lower limit of the thickness is preferably 0.1 um and the upper limit thereof is preferably 50 um. The lower limit is more preferably 1 um and the upper limit is more preferably 30 um.

When the transparent surface protective layer 2 has a thickness of smaller than 0.1 um, sufficient durability (e.g., scratch resistance, contamination resistance, weather resistance) may not be imparted. When the transparent surface protective layer 2 has a thickness of larger than 50 μm, the transparent resin film 10 of the present invention may have a lower transmittance, resulting in lower visibility of the picture of the picture layer.

The transparent surface protective layer 2 may further contain various additives, if needed. Examples of the additives include thermoplastic resins (e.g., urethane resins, polyvinyl acetal resins, polyester resins, polyolefin resins, styrene resins, polyamide resins, polycarbonate resins, acetal resins, vinyl chloride-vinyl acetate copolymers, vinyl acetate resins, acrylic resins, cellulose resins); lubricants (e.g., silicone resins, wax, fluororesins); light stabilizers (e.g., hindered amine radical scavengers); gloss/texture modifiers (e.g., silica, acrylic beads, mica); and colorants (e.g., dyes, pigments).

(Adhesion primer layer)

The transparent resin film 10 of the present invention preferably includes the adhesion primer layer 3 on the opposite side to the side facing the transparent surface protective layer 2 of the transparent resin layer 1.

The adhesion primer layer 3 can favorably provide the transparent resin film 10 of the present invention with adhesion to a picture layer on one side of a substrate.

The adhesion primer layer preferably contains a binder resin.

Examples of the binder resin include urethane resins, acrylic resins, acrylic-urethane resins, acrylic-urethane copolymer resins, cellulosic resins, polyester resins, and vinyl chloride-vinyl acetate copolymer resins. In the case where the ionizing radiation-curable resin composition for a surface protective layer described above contains a urethane acrylate oligomer, the binder resin preferably contains a urethane resin from the standpoint of the adhesion to the surface protective layer and the production efficiency.

The adhesion primer layer 3 preferably has a thickness of 0.5 um or more and 10 um or less. Having a thickness of 0.5 um or more, the adhesion primer layer 3 can favorably ensure adhesion between the transparent resin film 10 and a substrate on which the picture layer described later is laminated. When the adhesion primer layer has a thickness of 10 um or less, the resulting transparent resin film 10 is not too thick and can have sufficient transparency. Thus, the design properties of the decorative panel can be favorably ensured.

The adhesion primer layer 3 more preferably has a thickness of 0.8 um or more and 6 um or less.

The adhesion primer layer 3 may contain inorganic particles such as silica, if necessary.

(Transparent adhesive layer)

A known adhesive may be used as the transparent adhesive layer. Examples of the adhesive include polyurethanes, acrylic resins, polyolefins, polyvinyl acetate, polyvinyl chloride, vinyl chloride-vinyl acetate copolymers, ethylene-acrylic acid copolymers, and ionomers, as well as butadiene-acrylonitrile rubber, neoprene rubber, and natural rubber. Each of these adhesives may be used alone or in combination of two or more. Alternatively, the adhesive may be a two-component curable type agent, a moisture curable type agent, an ionizing radiation curable type agent, or a tackiness agent.

The transparent adhesive layer preferably has a thickness after drying of about 0.1-30 um, more preferably about 1-5 $\mu$m.

A primer layer for a transparent surface protective layer is preferably provided between the transparent surface protective layer 2 and the transparent resin layer 1.

The primer layer for a transparent surface protective layer can increase the adhesion strength between the transparent surface protective layer 2 and the transparent resin layer 1.

The primer layer for a transparent surface protective layer may contain the UV absorber.

The primer layer for a transparent surface protective layer used is preferably the same layer as the adhesion primer layer described above.

(Pattern of protrusions and depressions)

The transparent resin film 10 may have a pattern of protrusions and depressions on the side where the picture layer described later is to be laminated.

When the transparent resin film 10 has a pattern of protrusions and depressions on the side where the picture layer described later is to be laminated, the pattern of protrusions and depressions preferably has a Rzmax as defined in JIS B 0601 (2001) of 80 um or less.

When the pattern of protrusions and depressions on the side where the picture layer is to be laminated has a Rzmax as defined in JIS B 0601 (2001) of more than 80 $\mu$m, air bubbles can easily enter between the picture layer and the transparent resin film 10, possibly leading to impairment of the design properties of the decorative panel of the present invention.

The pattern of protrusions and depressions on the side where the picture layer is to be laminated more preferably has a Rzmax as defined in JIS B 0601 (2001) of 60 um or less, still more preferably 55 um or less, particularly preferably 50 um or less.

The lower limit of the Rzmax as defined in JIS B 0601 (2001) of the pattern of protrusions and depressions on the side where the picture layer is to be laminated is, for example, 15 um.

The Rzmax herein can be obtained by the measurement with a surface profilometer ("SURFCOM-FLEX-50A" available from Tokyo Seimitsu Co., Ltd.) under the following conditions.

[Measurement conditions]

Number of measurements: n = 5 (at any five points)
Standard for calculation: JIS'01
Measurement type: roughness measurement
Evaluation length: 12.5 mm
Cut-off value: 2.5 mm
Measurement speed: 0.60 mm/s
Filter type: Gaussian filter
Form elimination: straight line
$\lambda$s value: 8.0 $\mu$m

In the case of a directional pattern of protrusions and depressions, the measurement is performed in the flow direction and in a direction perpendicular to the flow direction, and a larger measurement value is taken as the Rzmax.

The pattern of protrusions and depressions may be formed by any method. Examples of the method include thermal embossing and transferring of a pattern of protrusions and depressions using a shape-forming sheet.

Thermal embossing may be performed, for example, using a known sheet- or rotary embosser.

Examples of an embossed pattern include a grain pattern, a hairline pattern, a satin pattern, a wood-grain vessel pattern, a pattern of protrusions and depressions of slab surfaces, a fabric surface texture, and a linear streak pattern.

The embossing may be performed at any temperature, preferably at a temperature that reduces a loss of the pattern of protrusions and depressions, i.e., an embossing return, during molding by thermal press bonding.

When a pattern of protrusions and depressions is formed on the side where the picture layer is to be laminated, the pattern of protrusions and depressions may be formed individually on both sides of the transparent resin film 10 by the method. Alternatively, the pattern of protrusions and depressions may be formed on one side of the transparent resin film 10 by the method such that a pattern of protrusions and depressions is simultaneously formed on the other side by the formation of the pattern of protrusions and depressions on the one side.

The transparent resin film 10 preferably has a pattern of protrusions and depressions on the opposite side to the side where the picture layer described later is to be laminated.

The pattern of protrusions and depressions on the opposite side to the side where the picture layer described later is to be laminated is preferably adjusted as appropriate, for example, in a manner that the center line average roughness Ra as defined in JIS B 0601 (1982) is within a range of 1 um or more and 30 um or less.

The thickness at a depression of the pattern of protrusions and depressions on the opposite side to the side where the picture layer is to be laminated is preferably 80 um or more. When the thickness at a depression of the pattern of protrusions and depressions is less than 80 $\mu$m, the decorative panel may not have sufficient durability (e.g., abrasion resistance, scratch resistance).

The "depression of the pattern of protrusions and depressions" is described here.

The "depression of the pattern of protrusions and depressions" refers to the thinnest portion of (the thickness of) the transparent resin film 10, which includes the deepest depression of the pattern of protrusions and depressions of the transparent surface protective layer 2, as shown in Fig. 3. It can be confirmed by microscopic observation of a cross-section of the transparent resin film 10. The length from the bottom of the deepest depression of the pattern of protrusions and depressions in the transparent surface protective layer 2 on the transparent resin layer 1 to the opposite side surface of the transparent resin film 10 is the "thickness at a depression of the pattern of protrusions and depressions".

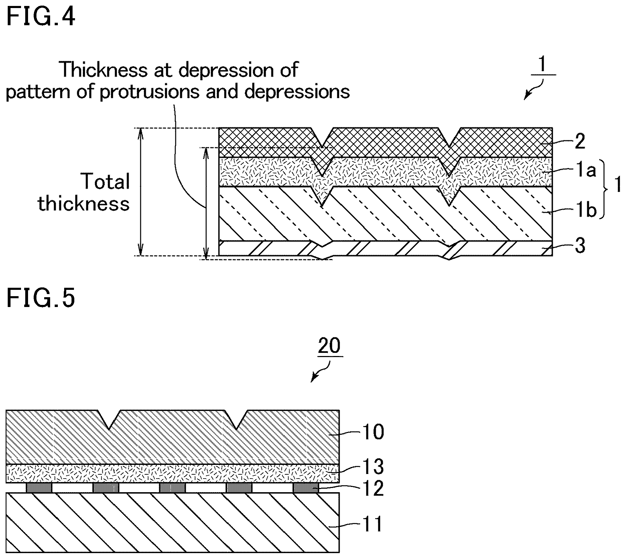

In the case where the pattern of protrusions and depressions is formed on the side with the transparent surface protective layer 2 such that a pattern of protrusions and depressions is simultaneously formed on the opposite side by the pattern of protrusions and depressions, as shown in Fig. 4, a protrusion corresponding to the deepest depression of the pattern of protrusions and depressions in the transparent surface protective layer 2 on the transparent resin layer 1 is formed on the opposite side. In this case, the "thickness at a depression of the pattern of protrusions and depressions" is the length from the bottom of the deepest depression of the pattern of protrusions and depressions in the transparent surface protective layer 2 on the transparent resin layer 1 to the opposite side surface where such a protrusion is present.

The upper limit of the thickness at a depression of the pattern of protrusions and depressions of the transparent resin film 10 is not limited, and is preferably, for example, 500 um.

As shown in Fig. 3, the length from the surface on the side with the transparent surface protective layer 2 to the opposite side surface is the total thickness of the transparent resin film 10. The lower limit of the total thickness is preferably 100 um and the upper limit is preferably 500 um. The lower limit is more preferably 140 um and the upper limit is more preferably 460 $\mu$m.

Various additives (such as inorganic fillers added to the primer layer and surface protective layer) added to the above-mentioned layers of the transparent resin film 10 of the present invention are preferably vesiculated. The additives may be vesiculated by any method such as a known method. Preferred is the supercritical reverse phase evaporation method.

Other methods for the vesiculation include the Bangham method, the extrusion method, the hydration method, the reverse phase evaporation method, and the freeze-thaw method.

The vesiculation methods are briefly described. In the Bangham method, a container such as a flask is charged with chloroform or a chloroform/methanol solvent mixture, to which a phospholipid is added and dissolved. The solvent is removed using an evaporator, thereby forming a lipid thin film. A dispersion liquid of additives is added thereto, followed by hydration and dispersion using a vortex mixer. Thus, vesicles are obtained.

In the extrusion method, a thin phospholipid solution is prepared and passed through a filter, instead of the use of a mixer used as an external perturbation in the Bangham method, thereby obtaining vesicles.

The hydration method is almost the same preparation method as the Bangham method, except that a mixer is not used and the dispersion was carried out by gentle stirring.

In the reverse phase evaporation method, a phospholipid is dissolved in diethyl ether or chloroform, to which a solution containing additives is added to form a W/O emulsion. From the emulsion was removed the organic solvent under reduced pressure, followed by addition of water. Thus, vesicles are obtained.

The freeze-thaw method uses cooling and heating as external perturbations, and vesicles are obtained by repetition of cooling and heating.

The supercritical reverse phase evaporation method is described in detail below.

In the supercritical reverse phase evaporation method, a mixture is prepared by uniformly dissolving a substance to form the outer film of the vesicle in carbon dioxide that is in the supercritical state or at the temperature or pressure at the supercritical point or higher. To the mixture is added an aqueous phase containing various additives as water-soluble or hydrophilic inclusion substances, and capsular vesicles containing additives as encapsulated substances in a single-layer membrane are formed.

Carbon dioxide in the supercritical state means carbon dioxide in a supercritical state at a critical temperature (30.98°C) or higher and a critical pressure (7.3773 ± 0.0030 MPa) or higher. Carbon dioxide at the temperature or pressure at the supercritical point or higher means carbon dioxide under the condition where either one of the temperature and pressure reaches the critical point. In this method, monolayer lamellar vesicles with diameters of 50-800 nm can be obtained.

In general, "vesicle" is a generic term for vesicles with a closed spherical shell membrane structure containing a liquid phase inside. Those in which the outer membrane is composed of a biological lipid such as a phospholipid are called liposomes.

Examples of the phospholipid include: glycerophospholipids such as phosphatidylcholine, phosphatidylethanolamine, phosphatidylserine, phosphatidic acid, phosphatidylglycerol, phosphatidylinositol, cardiolipin, egg yolk lecithin, hydrogenated egg yolk lecithin, soy lecithin, and hydrogenated soy lecithin; and sphingophospholipids such as sphingomyelin, ceramide phosphoryl ethanolamine, and ceramide phosphoryl glycerol.

The substance constituting the outer membrane used may be a dispersant such as a nonionic surfactant or a mixture of a nonionic surfactant and a cholesterol or triacylglycerol.

Examples of the nonionic surfactant include polyglycerol ethers, dialkylglycerols, polyoxyethylene hardened castor oil, polyoxyethylene alkyl ethers, polyoxyethylene sorbitan fatty acid esters, sorbitan fatty acid esters, polyoxyethylene-polyoxypropylene copolymers, polybutadiene-polyoxyethylene copolymers, polybutadiene-poly-2-vinylpyridine, polystyrene-polyacrylic acid copolymers, polyethylene oxide-polyethylethylene copolymers, and polyoxyethylene-polycaprolactam copolymers. One or more of these can be used.

Examples of the cholesterol include cholesterol, α-cholestanol, β-cholestanol, cholestane, desmosterol (5,24-cholestadien-3β-ol), sodium cholate, and cholecalciferol. One or more of these cholesterols can be used.

The outer membrane of the liposome may be formed from a mixture of a phospholipid and a dispersing agent. In the decorative sheet, the outer membrane is made of a liposome formed from a phospholipid, which allows for good compatibility between the resin composition that is the main component of the layers and various additives.

(Method for producing transparent resin film)

The method for producing the transparent resin film 10 includes: preparing a transparent resin layer containing a triazine UV absorber; applying an ionizing radiation curable resin to one side of the transparent resin layer; and irradiating the ionizing radiation curable resin with an electron beam.

The preparing preferably includes preparing a thermoplastic resin and laminating, on one side of the thermoplastic resin, a thermoplastic resin containing a triazine UV absorber to obtain a transparent resin layer.

The transparent resin layer 1a positioned closer to the transparent surface protective layer 2 of the transparent resin film 10 contains a triazine UV absorber, which can more favorably suppress yellowing caused by electron beam irradiation in the irradiation step, favorably impart weather resistance, and more favorably impart adhesion to the picture layer described later.

The ionizing radiation curable resin preferably contains a triazine UV absorber.

In the application step, the ionizing radiation curable resin containing a triazine UV absorber is applied to form the transparent surface protective layer 2.

The transparent surface protective layer 2 of the transparent resin film 10 contains a triazine UV absorber, which can suppress the yellowing described above and favorably impart weather resistance.

The application step includes, for example, applying a solution of an ionizing radiation curable resin composition by an application method such as gravure coating or roll coating.

The amount of ionizing radiation curable resin applied in the application step should be controlled to set the thickness of the transparent surface protective layer 2 within a desirable range.

The electron beam source used in the irradiation step may be appropriately selected from electron beam accelerators of any type (e.g., Cockcroft-Walton type, Van de Graaff type, resonant transformer type, insulating core transformer type, linear type, Dynamitron type, radio frequency type) capable of delivering electrons having an energy of 70-1000 keV.

The ionizing radiation irradiation dose is preferably, for example, about 1-10 Mrad.

UV light can also be used. A light source such as an ultra high-pressure mercury lamp, a high-pressure mercury lamp, a low-pressure mercury lamp, a carbon-arc lamp, a black light, or a metal halide lamp may be used to perform irradiation within a wavelength range of 190-380 nm.

Examples of the method for laminating layers of the transparent resin film 10 include lamination of the layers via the transparent adhesive layer or the adhesion primer layer and thermal lamination of the layers.

The thermal lamination may be carried out by a known method such as melt co-extrusion using a T-die.

<Decorative panel>

A decorative panel includes: a substrate including a picture layer; and the transparent resin film of the present invention on the substrate.

Fig. 5 is a schematic cross-sectional view of an example of a decorative panel.

A decorative panel 20 includes a picture layer 12 laminated on one side of a substrate 11, and has a structure in which the picture layer 12 and the transparent resin film 10 of the present invention are laminated via an adhesive layer 13.

Each component is described below.

(Substrate)

The substrate 11 is not limited and is appropriately determined according to the application of the decorative panel.

The substrate 11 may be made of any known material such as a resin material, a wood material, or a metal material. In particular, the material of the substrate is preferably a resin material or a wood material for the rigidity and lightness. The material may also be a composite material of these.

The resin material preferably contains, for example, a thermoplastic resin.

Preferred examples of the thermoplastic resin include: polyvinyl resins such as polyvinyl chloride resins, polyvinyl acetate resins, and polyvinyl alcohol resins; polyolefin resins such as polyethylene, polypropylene, polystyrene, ethylene-vinyl acetate copolymer resins (EVA), and ethylene-(meth)acrylic acid resins; polyester resins such as polyethylene terephthalate resins (PET resins); homopolymers and copolymers of thermoplastic resins such as acrylic resins, polycarbonate resins, polyurethane resins, acrylonitrile-butadiene-styrene copolymer resins (ABS resins), and acrylonitrile-styrene copolymer resins; diene rubbers such as styrene-butadiene rubber, polyisoprene rubber, and chloroprene rubber; non-diene rubbers such as butyl rubber and ethylene-propylene rubber; natural rubber; thermoplastic elastomers; and resin mixtures of these. Among these, preferred are polyolefin resins, acrylonitrile-butadiene-styrene copolymer resins, polyvinyl chloride resins, and ionomers. The resin material may be foamed.

Examples of the wood material include various materials such as cedar, cypress, zelkova, pine, lauan, teak, and Melapi. The core may be any of sliced veneers, single panels, plywood panels (including LVL), particle boards, medium-density fiberboards (MDF), high-density fiberboards (HDF), and bonded wood made from the above materials and laminated materials prepared by appropriately laminating these.

Examples of the metal material include iron and aluminum.

The substrate 11 may contain an inorganic compound. The substrate 11 containing an inorganic compound can have a lower linear expansion coefficient, resulting in higher water resistance of the transparent resin film 10.

The substrate 11 may contain various additives such as colorants (pigments or dyes), fillers such as wood flour and calcium carbonate, matting agents such as silica, blowing agents, flame retardants, lubricants such as talc, antistatic agents, antioxidants, UV absorbers, and light stabilizers, if necessary.

In the case where the substrate 11 is formed of multiple resin substrates, the types of the resins forming the multiple resin substrates may be the same or different, and the thicknesses of the multiple resin substrates may be the same or different.

The substrate 11 may have a hollow structure or partially have a slit or a through hole.

The substrate 11 may have any size. The size can be determined in accordance with the application of the decorative panel.

The substrate 11 may have any thickness. The thickness is preferably, for example, 0.01 mm or more, more preferably 0.1 mm or more and 50 mm or less.

The substrate 11 may have a substantially plate shape other than the flat plate shape, such as those including protrusions and depressions or a curved surface.

When the substrate 11 is thin (1 mm or less), an adherend described later may be provided on the back of the substrate 11.

(Picture layer)

The picture layer 12 is a layer for imparting decorativeness to the decorative panel. The picture layer 12 may be, for example, a uniformly colored hiding layer (solid print layer), a design layer formed by printing various patterns using ink and a printer, or a layer combining a hiding layer and a design layer (hereafter, referred to as a pattern layer).
The hiding layer can add an intended color to the substrate which may be stained or colored unevenly, thereby adjusting the color of the surface.
The design layer can provide the decorative panel with various patterns such as wood-grain patterns, stone grain patterns imitating the surface of a rock such as marble patterns (e.g., pattern of travertine marble), fabric patterns imitating fabric texture or fabric-like patterns, tiled patterns, brick-masonry patterns, parquet or patchwork patterns which are combinations of the above patterns, letters, symbols, abstract patterns, floral patterns, sceneries, and mascot characters. These patterns are formed by typical polychromic printing in process colors including yellow, red, blue, and black, or polychromic printing in spot colors in which plates of individual colors constituting the pattern are used.
The ink composition used for the picture layer 12 is a composition prepared by appropriately mixing a binder resin with a colorant such as a pigment and a dye, an extender pigment, a solvent, a stabilizer, a plasticizer, a catalyst, a curing agent, and the like. Any binder resin may be used. Preferred examples thereof include urethane resins, acrylic resins, urethane-acrylic resins, urethane-acrylic copolymer resins, vinyl chloride/vinyl acetate copolymer resins, vinyl chloride/vinyl acetate/acrylic copolymer resins, acrylic resins, polyester resins, and nitrocellulose resins. Any of these binder resins may be used alone or in combination of two or more.
Preferred examples of the colorant include: inorganic pigments such as carbon black (Chinese ink), iron black, titanium white, antimony white, chrome yellow, titanium yellow, red iron oxide, cadmium red, ultramarine, and cobalt blue; organic pigments or dyes such as quinacridone red, iso-indolinone yellow, and phthalocyanine blue; metal pigments formed of foil flakes of aluminum, brass, and the like; and pearl-like luster pigments (pearl pigments) formed of foil flakes of titanium dioxide-coated mica, basic lead carbonate, and the like.
The picture layer 12 may have any thickness. For example, the thickness is preferably 0.1 um or more, more preferably 0.5 um or more and 600 um or less. Having a thickness within the range indicated above, the picture layer 12 can impart an excellent design to the decorative panel and can have hiding properties.
The decorative panel 20 may further include additional layers such as an adhesive layer, a primer layer, or a backer layer, if necessary. In such a case, an adhered may be provided on the back of the adhesive layer, primer layer, or backer layer.
The adhesive layer and the primer layer each may be the same layer as the layer described for the transparent resin film 10.

(Backer layer)

Examples of the backer layer include resin backer layers such as a synthetic resin backer layer and a foamed resin backer layer, wood-based backer layers made of cork or the like, and nonwoven fabric-based backer layers. The backer layer is preferably provided as the lowermost layer (opposite side to the side where the transparent resin film 10 is to be laminated) of the substrate 11.
When the substrate 11 includes the backer layer, the decorative panel can have higher scratch resistance and impact resistance.
Examples of the resin contained in the synthetic resin backer layer include polypropylene, ethylene-vinyl alcohol copolymers, polyethylene, polymethylpentene, polyethylene terephthalate, high heat resistant polyalkylene terephthalate (e.g., polyethylene terephthalate obtained by substituting part of ethylene glycol with 1,4-cyclohexane dimethanol or diethylene glycol, product name: PET-G (available from Eastman Chemical Company)), polybutylene terephthalate, polyethylene naphthalate, polyethylene naphthalate-isophthalate copolymers, amorphous polyester (A-PET), polycarbonate, polyarylate, polyimide, polystyrene, polyamide, ABS, diene rubbers such as styrene-butadiene rubber, polyisoprene rubber, and chloroprene rubber, non-diene rubbers such as butyl rubber and ethylene-propylene rubber, natural rubber, and thermoplastic elastomers. Each of these resins may be used alone or in combination of two or more.
The synthetic resin backer layer may contain hollow beads.
The type, particle size, and amount of the hollow beads may be those described in JP 2014-188941 A.
The backer layer may contain a flame retardant.
The flame retardant used may be appropriately selected from those mentioned for the transparent resin film 10.
The synthetic resin backer layer may have any thickness. For example, the thickness is preferably 100-600 $\mu$m, more preferably 150-450 $\mu$m.
Examples of the method for forming the synthetic resin backer layer include calendering and extrusion molding of a molten resin. In particular, extrusion molding of a molten resin is favorable. For example, extrusion molding using a T-die is more favorable.

The foamed resin backer layer may be provided as a layer below the synthetic resin backer layer (opposite side to the side having a pattern of protrusions and depressions).

The foamed resin backer layer may be a layer described in JP 2014-188941 A.

(Adherend)

When the substrate 11 is thin (e.g., 1 mm or less), an adherend may be provided on the back side (the opposite side to the side where the transparent resin film 10 is to be laminated).

Examples of the material of the adherend include: wooden boards such as wood veneers, plywood, particle boards, medium-density fiberboards (MDF), and high-density fiberboards (HDF); gypsum-based boards such as gypsum boards and slag-gypsum boards; cement boards such as calcium silicate boards, asbestos boards, light weight aerated concrete boards, and hollow extruded cement boards; fiber cement boards such as pulp cement boards, asbestos cement boards, and wood chip cement boards; ceramic boards such as pottery boards, porcelain boards, earthenware boards, glass boards, and enameled boards; metal sheets such as iron sheets, galvanized steel sheets, polyvinyl chloride sol-applied steel sheets, aluminum sheets, and copper sheets; thermoplastic resin sheets such as polyolefin resin sheets, acrylic resin sheets, ABS sheets, polycarbonate sheets, and polyvinyl chloride resin sheets; thermosetting resin sheets such as phenolic resin sheets, urea resin sheets, unsaturated polyester resin sheets, polyurethane resin sheets, epoxy resin sheets, and melamine resin sheets; and so-called FRP sheets obtained by impregnating various fibrous substrates (e.g., glass fiber nonwoven fabric, woven fabric, paper) with resins (e.g., phenolic resins, urea resins, unsaturated polyester resins, polyurethane resins, epoxy resins, melamine resins, diallylphthalate resins) and curing the impregnated substrates for complication. Each of these may be used alone or two or more of these may be laminated to be used as a complex substrate.

The adherend may have any thickness.

Thermoplastic resin sheets and thermosetting resin sheets may contain various additives such as colorants (pigments or dyes), fillers such as wood flour or calcium carbonate, matting agents such a silica, blowing agents, flame retardants, lubricants such as talc, antistatic agents, antioxidants, UV absorbers, and light stabilizers, if necessary.

(Method for producing decorative panel)

The method for producing a decorative panel of the present invention produces a decorative panel including a substrate including a picture layer and the transparent resin film of the present invention in the stated order. The method includes: forming an adhesive layer on a side where the picture layer is to be laminated of the transparent resin film; and bonding the transparent resin film and the picture layer via the adhesive layer.

In the transparent resin film 10, a pattern of protrusions and depressions is formed on the opposite side to the side where the picture layer 12 is to be laminated by embossing or the like. At this time, a bit of a pattern of protrusions and depressions is unintendedly formed on the surface on the opposite side (base layer side) to the surface subjected to embossing by the pattern of protrusions and depressions on the embossed side. In such a case, air entrainment, i.e., a phenomenon that air enters the pattern of protrusions and depressions on the side where the picture layer is to be laminated of the transparent resin film 10, may occur to lower the design properties.

Since the method for producing the decorative panel 20 of the present invention includes a step of forming the adhesive layer 13 on the side where the picture layer 12 is to be laminated of the transparent resin film 10, the adhesive layer 13 is provided even at a depression of the pattern of protrusions and depressions on the side where the picture layer 12 is to be laminated, and the air entrainment can be prevented, thereby suppressing impairment of the design properties.

The decorative panel 20 may have any thickness. The thickness is, for example, preferably 0.05 mm or more, more preferably 1 mm or more and 50 mm or less.

EXAMPLES

In the following, the present invention is more specifically described with reference to, but not limited to, examples.

(Example 1)

A transparent polypropylene film (60 $\mu$m thick, also referred to as a transparent resin layer b) was provided. To one side of the transparent resin layer b was applied an adhesion primer agent containing a two-component curable urethane resin, thereby forming an adhesion primer layer (2 um thick).

Next, on one side (opposite side to the side with the adhesion primer layer) of the transparent resin layer b was laminated a transparent polypropylene resin (100 um thick, also referred to as a transparent resin layer a) containing a triazine UV absorber by extrusion thermal lamination. The surface of the transparent resin layer a was subjected to corona treatment. To the treated surface was applied a primer agent containing a two-component curable urethane acrylic copolymer resin (to a thickness of 2 um). Thus, a primer layer for a surface protective layer was formed.

Then, to the surface of the primer layer for a surface protective layer was applied an ionizing radiation curable resin containing a triazine UV absorber (application amount: 15 $\mu$m) by gravure coating. The applied resin was irradiated with an electron beam using an electron irradiation device under the conditions of an acceleration voltage of 165 keV and 30 kGy. Thus, a transparent surface protective layer was formed.

After heating of the side with the surface protective layer with a contactless infrared heater to soften the transparent resin layer a and the transparent resin layer b, the surface was immediately subjected to hot press embossing. Thus, a transparent resin film having a pattern of protrusions and depressions was obtained.

Table 1 shows the thickness of the transparent resin layers (a + b) and the amount of the UV absorber in the transparent surface protective layer.

The thickness at a depression of the pattern of protrusions and depressions on the opposite side to the side where the picture layer is to be laminated was 100 um. The pattern of protrusions and depressions on the side where the picture layer is to be laminated of the transparent resin film had a Rzmax as defined in JIS B 0601 (2001) of 40 um.

The "thickness at a depression of the pattern of protrusions and depression" and the Rzmax were measured by the methods described herein.

(Example 2)

A transparent resin film was produced as in Example 1, except that the extruded thickness of the transparent resin layer a, which was laminated by extrusion thermal lamination, was 60 um.

The thickness at a depression of the pattern of protrusions and depressions and the Rzmax as defined in JIS B 0601 (2001) on the side where the picture layer is to be laminated of the transparent resin film are shown in Table 3.

(Example 3)

A transparent resin film was produced as in Example 1, except that the amount of the UV absorber was changed as shown in Table 1.

(Comparative Example 1)

A transparent resin film was produced as in Example 1, except that the thickness of the transparent resin layers (a + b) was changed, the UV absorber in the transparent surface protective layer was changed to a benzotriazole UV absorber, and the amount of the UV absorber was changed as shown in Table 1.

(Comparative Example 2)

A transparent resin film was produced as in Comparative Example 1, except that the amount of the UV absorber was changed as shown in Table 1.

(Reference Example 1)

A transparent resin film was produced as in Comparative Example 1, except that the thickness of the transparent resin layers (a + b) was changed and no UV absorber was contained in the transparent surface protective layer.

(Example 4)

A transparent resin film was produced as in Example 1, except that, in the transparent resin layer a which was laminated by extrusion thermal lamination, 10 parts of a phosphinic acid metal salt flame retardant (Pekoflam STC, available from Archroma) was added per 100 parts of the transparent polypropylene resin.

The amount of the flame retardant was 5.7% by mass, relative to the total mass of the transparent resin layers (a + b) set to 100% by mass.

(Example 5)

A transparent resin film was produced as in Example 4, except that the flame retardant was changed to a phosphazene flame retardant (Rabitle FP-100, available from Fushimi Pharmaceutical Co., Ltd.).

The amount of the flame retardant was 5.7% by mass, relative to the total mass of the transparent resin layers (a + b) set to 100% by mass.

(Example 6)

A transparent resin film was produced as in Example 1, except that, in the transparent resin layer a, 30 parts of a phosphinic acid metal salt flame retardant (Pekoflam STC, available from Archroma) was added per 100 parts of the transparent polypropylene resin.

The amount of the flame retardant was 14.4% by mass, relative to the total mass of the transparent resin layers (a + b) set to 100%.

(Example 7)

A transparent resin film was produced as in Example 1, except that embossing was performed using a deep embossing plate different from that used in Example 1. The thickness at a depression of the pattern of protrusions and depression of the obtained transparent resin film and the Rzmax as defined in JIS B 0601(2001) on the side where the picture layer is to be laminated of the transparent resin film were as shown in Table 3.

(Example 8)

A transparent resin film was produced as in Example 2, except that the same deep embossing plate as in Example 7 was used.

The thickness at a depression of the pattern of protrusions and depressions of the obtained transparent resin film and the Rzmax as defined in JIS B0601 (2001) on the side where the picture layer is to be laminated of the transparent resin film were as shown in Table 3.

(Example 9)

A transparent resin film was produced as in Example 1, except that three parts by mass of a silver-supported phosphoric acid-based glass compound (PG-711 available from Koa Glass Co., Ltd.) was added as an antiviral agent per 100 parts by weight of the ionizing radiation curable resin.

(Example 10)

A transparent resin film was produced as in Example 1, except that the ionizing radiation curable resin was blended with an anionic phenolic material with anti-allergenic properties ("EXP 20530A" available from DIC Corporation) at a solid content ratio of 23% by mass and a zinc-based material with anti-allergenic properties ("EXP 20530B" available from DIC Corporation) at a solid content ratio of 23% by mass.

(Color difference before and after electron beam irradiation)

In the examples and comparative examples, films prior to the application of the ionizing radiation curable resin (a film including the transparent resin layers (a + b) and the adhesion primer layer) were each used as a test film.

The test film was placed on a standard white plate and $L_1^*$, $a_1^*$, and $b_1^*$ were measured by the following method.

The test film was then irradiated with an electron beam using an electron irradiation device under the conditions of an acceleration voltage of 165 keV and 30 kGy. The test film after electron beam irradiation was placed on a standard white plate, and $L_2^*$, $a_2^*$, and $b_2^*$ were measured by the following method.

The "L*, a*, b*" means "L*, a*, b*" in the color system standardized by International Commission on Illumination (CIE) and employed in JIS Z8781-4: 2013.

[Measuring Method]

L*, a*, and b* values were measured using a chroma meter (CR-400 available from Konica Minolta Japan, Inc.) based on the total reflection light (specular reflection light + diffused reflection light) under irradiation with light (illuminant D65) to the surface on the side with the transparent resin layer b of the transparent resin film at an incident angle of 10 degrees (direction normal to the surface = 0 degrees).

The values obtained by the measurement were substituted into the following equation for calculation of the color difference ΔE. The color difference ΔE was evaluated based on the following evaluation criteria. Table 1 shows the results.

$$\text{Color difference } \Delta E = ((L_1* - L_2*)^2 + (a_1* - a_2*)^2 + (b_1* - b_2*)^2)^{1/2}$$

$$\Delta b = b_1* - b_2*$$

[Evaluation Criteria]

(Evaluation criteria on ΔE)

++: ΔE < 1.0
+: 1.0 ≤ ΔE ≤ 2.0
-: 2.0 < ΔE

<Production of decorative panel>

Each of the obtained transparent resin films was laminated in a manner that the side with the adhesion primer layer of the transparent resin film was in contact with a decorative side (picture layer) of a directly printed wood substrate. Thus, a decorative panel was produced.

(Flame retardancy)

[Horizontal flammability test (flame retardancy: flame spread resistance)]

The decorative panels obtained in Examples 1 and 4-6 were each cut into a size of 9 cm × 30 cm as a specimen.

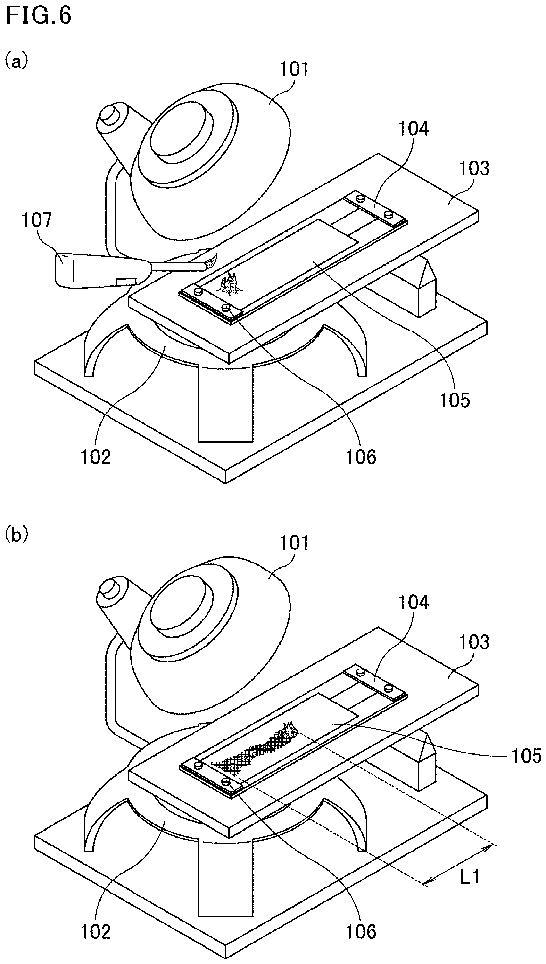

As illustrated in Figs. 6(a) and 6(b), on a table 102 of a commercial household heater 101 (voltage: AC 100 V, power consumption: 1200 W) was placed a rectangular metallic board 103. A metallic frame 104 was set on the board 103, and a specimen 105 was placed inside the frame 104. The test for determining flame spread resistance was performed at a heater angle of 45° and a heater output of 4/5.

Specifically, the specimen was pre-heated using the household heater for two minutes. Then, as illustrated in Fig. 6(a), the specimen was heated with a lighter 107 at an end portion 106 on the side closer to the heater in the longitudinal direction of the specimen for one minute to catch flame, and the flame was allowed to spread in the longitudinal direction of the specimen 105 as illustrated in Fig. 6(b).

The state of flame spread was visually observed, and the distance of spread (L1) and duration of burning were evaluated as follows. Table 2 shows the results.

[Distance of spread (L1)]

The flame spread distance was measured from the initial ignition of the specimen, excluding the flame of the lighter, as the distance of spread (L1). The distance of spread (L1) was evaluated based on the following evaluation criteria. One rated as + or better is considered acceptable in actual use.

+: L1 was shorter than 10 cm.
-: L1 was 10 cm or longer.

[Duration of burning]

The duration of burning from initial ignition of the specimen, excluding the flame of the lighter, to self-extinguishing was measured, and evaluated according to the following evaluation criteria. One rated as + or better is considered acceptable in actual use.

+++: Duration of shorter than 100 seconds or no ignition.
++: Duration of 100 seconds or longer but shorter than 300 seconds.
+: Duration of 300 seconds or longer but shorter than 600 seconds.
-: Duration of 600 seconds or longer (no self-extinguishing in 600 seconds).

<Abrasion resistance (Taber abrasion test)>

The decorative panels obtained in Examples 1-2 and 7-8 were each tested at a load of 1 kg using a Taber-type abrasion tester (Rigaku Kogyo Co., Ltd.) and an abrasion wheel (S-42) in accordance with the Japanese Agricultural Standards for flooring; Abrasion A test. The remnant of the picture layer after 1,000 revolutions of the abrasion wheel was evaluated. Table 3 shows the results.

++: 80% or more of the picture layer remains.
+: Half or more but less than 80% of the picture layer remains.
-: Less than half of the picture layer remains.

<Design properties>

The printed patterns of the decorative panels obtained in Examples 1-2 and 7-8 were each visually evaluated. Table 3 shows the results.

++: Printed pattern is clearly visible.
+: Printed patterns appear slightly clouded.
-: Printed pattern is not clearly visible.

<Antiviral properties>

The transparent resin films produced in Examples 1 and 9 were each tested for antiviral properties in accordance with the measurement of antiviral activity (ISO 21702). The antiviral properties were evaluated in terms of the antiviral activity value against influenza viruses. Table 4 shows the results.

+: Antiviral activity value of 2.0 or higher
-: Antiviral activity value of lower than 2.0

<Anti-allergenic properties>

The transparent resin films produced in Examples 1 and 10 were each cut into small pieces and soaked in a mite allergen solution for one day. The allergen content of the film was visually checked by the horizontal development chromatography method (Mitey Checker). Table 5 shows the results.

+: A decrease in allergen level was observed.
-: No decrease in allergen level was observed.

[Table 1]

|  | Example 1 | Example 2 | Example 3 | Comparative Example 1 | Comparative Example 2 | Reference Example 1 |
|---|---|---|---|---|---|---|
| Type of UV absorber | Triazine | Triazine | Triazine | Benztriazole | Benztriazole | - |
| Thickness of transparent resin layers (μm) | 160 | 120 | 160 | 160 | 160 | 160 |
| Amount of UV absorber (mass%) | 0.25 | 0.25 | 0.5 | 0.5 | 0.25 | - |

(continued)

| | Example 1 | Example 2 | Example 3 | Comparative Example 1 | Comparative Example 2 | Reference Example 1 |
|---|---|---|---|---|---|---|
| Color difference before and after electron beam irradiation (△E) | 0.91 | 0.58 | 1.28 | 6.55 | 5.17 | 0.37 |
| Evaluation on color difference (△E) | ++ | ++ | + | - | - | ++ |
| Color difference before and after electron beam irradiation (△b) | -0.84 | -0.53 | -1.18 | -6.44 | -5.07 | -0.34 |

[Table 2]

| | | Example 1 | Example 4 | Example 5 | Example 6 |
|---|---|---|---|---|---|
| Flame retardancy | Distance of spread (cm) | 20 | 0 | 1.1 | 0.3 |
| | Evaluation | - | + | + | + |
| | Duration of burning (sec.) | 600 | 89 | 122 | 90 |
| | Evaluation | - | +++ | ++ | ++ |

[Table 3]

| | Example 1 | Example 2 | Example 7 | Example 8 |
|---|---|---|---|---|
| Thickness of transparent resin layers (μm) | 160 | 120 | 160 | 120 |
| Thickness at depression of pattern of protrusions and depressions of transparent resin film (μm) | 100 | 90 | 70 | 80 |
| Rzmax of transparent resin film (μm) | 40 | 55 | 60 | 90 |
| Abrasion resistance | ++ | + | - | ++ |
| Design properties | ++ | + | + | - |

[Table 4]

| | Example 1 | Example 9 |
|---|---|---|
| Antiviral properties | - | + |

[Table 5]

| | Example 1 | Example 10 |
|---|---|---|
| Anti-allergenic properties | - | + |

In the case of the transparent resin films obtained in the examples, yellowing was suppressed even after electron beam irradiation for formation of the transparent surface protective layer, preventing impairment of the design properties.

In Examples 4-6 in which the transparent resin layer contained a flame retardant, the films were excellent in flame retardancy.

In Examples 1, 2 and 8 in which the thickness at a depression of the pattern of protrusions and depressions of the transparent resin film was 80 um or more, the films were also excellent in abrasion resistance. In Examples 1, 2 and 7 in which the Rzmax of the pattern of protrusions and depressions on the side where the picture layer is to be laminated is 80 um or less, the films had excellent design properties. In Example 1 in which the Rzmax was 50 um or less, the film had particularly excellent design properties.

In Example 9 in which the transparent surface protective layer contained an antibacterial agent or an antiviral agent, the film had antibacterial or antiviral properties. In Example 10 in which the transparent surface protective layer contained an anti-allergenic agent, the film had anti-allergenic properties.

In contrast, in the comparative examples in which the transparent resin films contained a benzotriazole UV absorber, yellowing occurred due to electron beam irradiation for formation of the transparent surface protective layer.

INDUSTRIAL APPLICABILITY

The present invention can provide a transparent resin film that has a pattern of protrusions and depressions to exhibit excellent design properties and can suppress yellowing even when irradiated with electron beams to prevent impairment of design properties, while imparting weather resistance.

The decorative panel including the transparent resin film of the present invention can be suitably used, for example, as interior materials for walls, ceilings, floors, and the like of buildings; joinery such as window frames, doors, and handrails; furniture; casings for household appliances, OA equipment, and the like; and exterior materials for front doors and the like.

REFERENCE SIGNS LIST

1       transparent resin layer
1a      transparent resin layer
1b      transparent resin layer
2       transparent surface protective layer
3       adhesion primer layer
10      transparent resin film
11      substrate
12      picture layer
13      adhesive layer
20      decorative panel
101     household heater
102     table of household heater
103     rectangular board
104     metallic frame
105     specimen
106     end portion
107     lighter

**Claims**

1. A transparent resin film for use in protection of a picture layer laminated on one side of a substrate, the transparent resin film comprising at least:

   a transparent resin layer; and
   a transparent surface protective layer, laminated in the stated order,
   the transparent resin film having a pattern of protrusions and depressions on an opposite side to a side where the picture layer is to be laminated,
   the transparent surface protective layer comprising an ionizing radiation curable resin,
   at least one of the transparent resin layer or the transparent surface protective layer containing a triazine UV absorber.

2. The transparent resin film according to claim 1,
   wherein the transparent resin film has a thickness at a depression of the pattern of protrusions and depressions of 80 um or more.

3. The transparent resin film according to claim 1 or 2,
wherein the transparent resin film has a pattern of protrusions and depressions on the side where the picture layer is to be laminated, and the pattern of protrusions and depressions on the side where the picture layer is to be laminated has a Rzmax as defined in JIS B 0601 (2001) of 80 um or less.

4. The transparent resin film according to any one of claims 1 to 3,
wherein the transparent resin film comprises an adhesion primer layer on an opposite side to a side facing the transparent surface protective layer of the transparent resin layer.

5. The transparent resin film according to any one of claims 1 to 4,
wherein the transparent resin layer comprises a thermoplastic resin.

6. The transparent resin film according to any one of claims 1 to 5,
wherein the transparent resin layer includes at least two layers.

7. The transparent resin film according to any one of claims 1 to 6,
wherein the transparent resin layer contains a flame retardant.

8. The transparent resin film according to any one of claims 1 to 7,
wherein the transparent surface protective layer contains a flame retardant.

9. The transparent resin film according to claim 7,
wherein the transparent resin layer containing the flame retardant further contains a filler.

10. The transparent resin film according to any one of claims 7 to 9,
wherein the flame retardant is at least one selected from the group consisting of phosphinic acid metal salt flame retardants, phosphazene flame retardants, and NOR hindered amine flame retardants.

11. The transparent resin film according to any one of claims 1 to 10,
wherein the transparent surface protective layer contains at least one of an antibacterial agent, an antiviral agent, or an anti-allergenic agent.

12. A decorative panel comprising:

the transparent resin film according to any one of claims 1 to 11; and
a substrate comprising a picture layer.

13. A method for producing a transparent resin film, comprising:

preparing a transparent resin layer containing a triazine UV absorber;
applying an ionizing radiation curable resin to one side of the transparent resin layer; and
irradiating the ionizing radiation curable resin with an electron beam.

14. The method for producing a transparent resin film according to claim 13,
wherein the preparing includes preparing a thermoplastic resin and laminating, on one side of the thermoplastic resin, a thermoplastic resin containing a triazine UV absorber to obtain a transparent resin layer.

15. The method for producing a transparent resin film according to claim 13 or 14,
wherein the ionizing radiation curable resin contains a triazine UV absorber.

16. A method for producing a decorative panel comprising a substrate comprising a picture layer and the transparent resin film according to any one of claims 1 to 11 in the stated order, the method comprising:

forming an adhesive layer on a side where the picture layer is to be laminated of the transparent resin film; and
bonding the transparent resin film and the picture layer via the adhesive layer.

FIG.1

10

2

1

FIG.2

10

2

1a ⎤
   ⎥ 1
1b ⎦

3

FIG.3

Thickness at depression of
pattern of protrusions and depressions

10

Total
thickness

2

1a ⎤
   ⎥ 1
1b ⎦

3

## FIG.4

Thickness at depression of
pattern of protrusions and depressions

Total
thickness

## FIG.5

# FIG.6

(a)

(b)

## INTERNATIONAL SEARCH REPORT

| International application No. |
| --- |
| PCT/JP2021/011213 |

**A. CLASSIFICATION OF SUBJECT MATTER**
Int. Cl. B32B27/00(2006.01)i, B32B27/16(2006.01)i, B32B27/18(2006.01)i,
E04F15/02(2006.01)i, E04F13/07(2006.01)i
FI: B32B27/18 A, B32B27/00 E, B32B27/16 101, E04F13/07 B, E04F15/02 A, E04F15/02 C

According to International Patent Classification (IPC) or to both national classification and IPC

**B. FIELDS SEARCHED**

Minimum documentation searched (classification system followed by classification symbols)
Int. Cl. B32B1/00-43/00, E04F13/00-13/30

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2019-30999 A (TOPPAN PRINTING CO., LTD.) 28 February 2019, paragraphs [0010], [0011], [0016], | 1, 4-5, 12-13, 15-16 |
| Y | [0027], [0040], [0042], fig. 1 | 2-3, 6-11, 14 |
| Y | JP 2011-251412 A (DAINIPPON PRINTING CO., LTD.) 15 December 2011, paragraph [0047] | 2-3 |
| Y | JP 2019-155824 A (TOPPAN PRINTING CO., LTD.) 19 September 2019, paragraph [0018] | 6, 14 |
| Y | JP 2007-106056 A (TOPPAN COSMO INC.) 26 April 2007, claims | 7-9 |
| Y | JP 2007-297568 A (ASAHI KASEI CHEMICALS CORP.) 15 November 2007, claims | 10 |

☒ Further documents are listed in the continuation of Box C.    ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14.05.2021 | 08.06.2021 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2021/011213 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | WO 2019/124510 A1 (DAINIPPON PRINTING CO., LTD.) 27 June 2019, paragraph [0061] | 11 |
| A | JP 2019-155777 A (TOPPAN PRINTING CO., LTD.) 19 September 2019, entire text | 1-16 |

Form PCT/ISA/210 (continuation of second sheet) (January 2015)

**INTERNATIONAL SEARCH REPORT**
Information on patent family members

International application No.

PCT/JP2021/011213

| Patent Documents referred to in the Report | Publication Date | Patent Family | Publication Date |
|---|---|---|---|
| JP 2019-30999 A | 28.02.2019 | US 2020/0048445 A1<br>claims, paragraph<br>[0027], fig. 2<br>WO 2018/221610 A1<br>EP 3632978 A1<br>CN 110691814 A<br>KR 10-2020-0015460 A | |
| JP 2011-251412 A | 15.12.2011 | (Family: none) | |
| JP 2019-155824 A | 19.09.2019 | (Family: none) | |
| JP 2007-106056 A | 26.04.2007 | (Family: none) | |
| JP 2007-297568 A | 15.11.2007 | (Family: none) | |
| WO 2019/124510 A1 | 27.06.2019 | (Family: none) | |
| JP 2019-155777 A | 19.09.2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005120255 A
- JP 6136433 B
- JP 2014188941 A